# EUROPEAN PATENT SPECIFICATION

(11) **EP 4 474 279 B1**
(45) Date of publication and mention of the grant of the patent: **06.05.2026**
(21) Application number: 24176245.9
(22) Date of filing: 16.05.2024
(51) Int. Cl.: B64D 13/00, B60H 1/00, F24F 9/00

(54) **OVERHEAD AMBIENT AIR CONTROL SYSTEMS**
ÜBERKOPFLÜFTUNGSSYSTEME
SYSTÈMES PLAFONNIERS DE CONTRÔLE D'AIR AMBIANT

(30) Priority: 08.06.2023 US 202363506940 P
(43) Date of publication of application: 11.12.2024
(73) Proprietor: Embraer S.A., 12227-901 São José Dos Campos SP (BR)
(72) Inventor: TESSELE, Samantha Gonzalez, 12227-901 São José dos Campos - SP (BR); BEEVER, Jay, 12227-901 São José dos Campos - SP (BR); CASTANHA, Bruno Kimura, 12227-901 São José dos Campos - SP (BR); MOCHIDUKY, Silvio Hideo Lemos, 12227-901 São José dos Campos - SP (BR); MOTOYAMA, Hugo, 12227-901 São José dos Campos - SP (BR); COTRIM, Victor Hugo de Oliveira, 12227-901 São José dos Campos - SP (BR); DA SILVA, Erik Vasconcelos, 12227-901 São José dos Campos - SP (BR); MAIA, Alan Felipe Castilho, 12227-901 São José dos Campos - SP (BR); REA, Joshua, 12227-901 São José dos Campos - SP (BR); GONALVES PIRES, Divanir Fernando Neves Fernandes, 12227-901 São José dos Campos - SP (BR); DESAI, Beenal, 12227-901 São José dos Campos - SP (BR); BORTHOLIN, Thais, 12227-901 São José dos Campos - SP (BR); PAPA, Ramon, 12227-901 São José dos Campos - SP (BR); CHAGAS, Patricia Silva Madeira, 12227-901 São José dos Campos - SP (BR); DE LIMA, Patricia Greff, 12227-901 São José dos Campos - SP (BR)
(74) Representative: Liesegang, Eva

(56) References cited:
- DE-A1- 102016 108 009
- US-A1- 2020 148 367
- US-A1- 2021 387 737
- US-A1- 2022 057 094

## Description

### FIELD

The embodiments disclosed herein relate generally to overhead ambient air control systems that are provided for the comfort of vehicle passengers, for examples, passengers being transported by mass transit vehicles such as aircraft, buses, trains and the like.

### BACKGROUND

It is conventional in many mass transit vehicles, such as aircraft, to have an overhead passenger comfort module that may include personal lights and forced air ventilation devices. The forced air ventilation devices are typically poppet valves that the passenger can screw/unscrew which in turn causes the poppet of the valve to close/open relative to a vent opening and thereby regulate the amount of air ventilation being delivered. The air flow direction can also be manipulated by providing a ball and socket connection of the poppet valve to the overhead passenger comfort module. These types of conventional forced air ventilation devices are colloquially known as "gaspers" in aircraft parlance.

One problem associated with conventional gaspers is that the devices cannot typically be employed for long periods of time during transport due to the rather narrow jet of ventilation air that is discharged which can cause passenger discomfort during prolonged use. For example, if the rather narrow jet of ventilation air is directed towards the passenger's face, a feeling dryness in the passenger's eyes and nose may occur. The passenger may then redirect the jet of ventilation air to different areas of the face or even close the gasper completely after short periods of use. The conventional gaspers are also not conducive to the aesthetics of modern executive transport cabins.

What has been needed in this art therefore are forced air ventilation devices that reduce or eliminate entirely the problems associated with conventional gasper devices. It is towards providing a solution to such a problems that the embodiments disclosed herein are directed.

US 2020/148367 A1 discloses an aircraft air distribution assembly providing integrated personally controllable air flow and cabin air flow. The aircraft air distribution assembly comprises a plenum and a flow restriction system. The plenum is connected to a plurality of personal air outlets configured to provide the personally controllable air flow. The flow restriction system extends through at least one wall of the plenum, the flow restriction system configured to set a pressure for the cabin air flow.

US 2022/057094 A1 discloses device, system, and method for creating air capsules enclosing passengers in vehicles. The device for creating air capsules enclosing passengers in vehicles includes an attachment portion. The attachment portion is removably attached to a gasper within a vehicle and receives airflow from an outlet port of the gasper. The device further includes a diffuser portion integrated with the attachment portion. The diffuser portion is configured to intake the airflow from the attachment portion. Further, the diffuser portion includes a flow control portion configured to generate at least one airflow stream from the airflow. A first airflow stream of the at least one airflow stream creates an air capsule configured to enclose a passenger in the vehicle.

### SUMMARY

Broadly, the embodiments disclosed herein are directed toward personal overhead air ventilation devices for vehicle passengers that distribute the air flow between two possible output paths into a concave frame that diffuses and widely disperses the air flow thereby generating a personalized ambient air zone establishing a personal microclimate for the passenger. Further, the existence of two air outlet paths having their respective openings electronically controlled allows for different air flow intensity and greater air flow coverage for the ambient air zone. The ambient air zone will thereby in turn create a personalized atmosphere for the vehicle passenger that, when used for long periods of time, is more comfortable (e.g., less noisy, does not dry the passenger's eyes/nose and the like).

According to the embodiments disclosed herein, air ventilation devices are included in an overhead passenger comfort module and are responsible for providing air to passengers through one or both of the two electronically controlled outlets. The air ventilation device receives air from the on-board air conditioning or outside air ventilation distribution system and directs the air through vents into the cabin and into the passenger comfort module located above each passenger. As soon as the air leaves the supply tubes of the air supply system, it freely impinges on a concavely curved profiled edge frame that causes the air to lose velocity and gain dispersion in the flow area thereby creating a kind of "mist" close to the passenger's face. This mist of diffused air provides freshness (e.g., ambient air effect) without the need to have an air jet being directed onto the passenger's body and causing discomfort due to high air flow velocity typically associated with conventional gasper devices.

According to certain embodiments an overhead passenger comfort module is provided which includes a module segment comprising a support frame member which includes a peripheral trim frame member, and a ventilation system supported by the support frame member. The ventilation system includes a supply conduit adapted to being fluid-connected to a supply of ventilation air, and first and second branch conduits fluid-connected at one end to the supply conduit and terminating in elongate first and second ventilation openings at first and second edge regions of the support frame member. The trim frame member includes first and second concavely curved first and second edge diffuser portions which are adjacently positioned to and spaced from the first and second ventilation openings respectively. Ventilation air discharged from the first and second ventilation openings will therefore impinge on the concavely curved first and second edge diffuser portions of the trim frame member so as create a diffused volume of air which envelops substantially a passenger seated therebelow to establish a personal ambient air zone for the passenger.

The overhead passenger comfort module includes first and second valves operatively associated with the first and second branch conduits and operable to control air flow therethrough, respectively. A passenger accessible control unit may thus be operably connected to the first and second valves to allow passenger control of the air flow through the first and second branch conduits, respectively, thereby adjusting the ambient air zone to suit personal preferences.

The support frame may include a front face plate attached thereto so as to visibly cover the ventilation system supported by the support frame. The front face plate may be substantially planar.

In some embodiments, the first and second ventilation openings are positioned at side and bottom edge regions of the support frame member. The concavely curved first and second edge diffuser portions will thereby be adjacently positioned to and spaced from the first and second ventilation openings at the side and bottom edge regions of the support frame member, respectively.

A mirror image pair of the module segments may be provided. Such an embodiment is especially useful for overhead passenger comfort for vehicles having so-called club seating arrangements (i.e., a pair of facing passenger seats). In such an embodiment, each of the module segments can be positioned overhead of a respective one of the passenger seats so as to provide the passengers in the seats with a respective individualized ambient air zone.

These and other aspects and advantages of the present invention will become clearer after careful consideration is given to the following detailed description of the preferred exemplary embodiments thereof.

### BRIEF DESCRIPTION OF ACCOMPANYING DRAWINGS

The disclosed embodiments of the present invention will be better and more completely understood by referring to the following detailed description of exemplary non-limiting illustrative embodiments in conjunction with the drawings of which:
FIGS. 1A and 1B are elevational view of an aircraft cabin interior showing the placement of overhead passenger comfort modules in a club seating arrangement which include a conventional air gasper (FIG. 1A) and an air ventilation system in accordance with an embodiment of the present invention (FIG. 1B);
FIGS. 2 and 3 are respectively isolated bottom from and top front perspective views of the air ventilation system shown in FIG. 1B according to an embodiment of the present invention;
FIG. 4 is a back side plan view of the air ventilation system shown in FIGS. 2 and 3;
FIG. 5 is an enlarged perspective view of an end portion of the air ventilation system shown in FIGS. 2 and 3;
FIG. 6 is a cross-sectional view of the air ventilation system as taken along lines 6-6 in FIG. 5; and
FIG. 7 is a cross-sectional view of the air ventilation system as taken along lines 7-7 in FIG. 5.

### DETAILED DESCRIPTION OF EMBODIMENTS

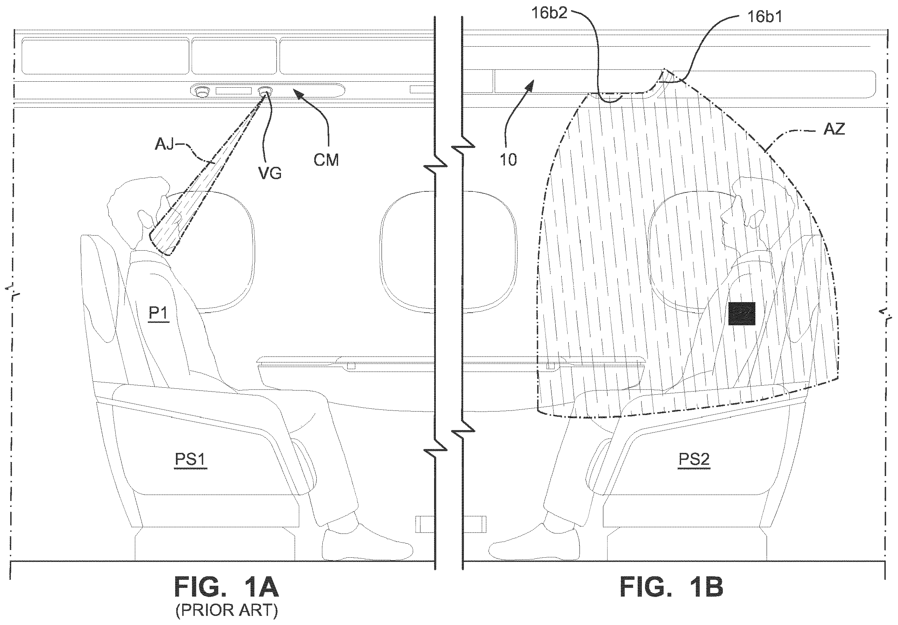

Accompanying FIGS. 1A schematically illustrates and interior space of a vehicle, e.g., an interior cabin of an aircraft, provided with a conventional overhead passenger comfort module CM that includes a ventilation gasper VG. A passenger seat PS1 is positioned in proximity below the comfort module CM so that a relatively narrow air jet AJ issuing from the gasper VG can be directed toward the face of a passenger P1 in a seated in the passenger seat PS1. As noted briefly above, the gasper VG can be manipulated so as to open/close associated poppet valve to regulate the amount of air flow in the air jet and/or swivel the gasper VJ to select the desired directional vector for the air jet AJ.

The overhead passenger comfort module 10 in accordance with an embodiment of the present invention is depicted in FIG. 1B. Rather than the relatively narrow air jet AJ created by the conventional gasper VG, the passenger comfort module 10 creates a widely diffused air zone AZ which envelops the passenger P2 seated in the passenger seat PS2 therebelow. As such, the passenger conform module 10 in accordance with the embodiments of the present invention provides the passenger P2 with a personal ambient air environment that can be modulated and controlled as will be described below.

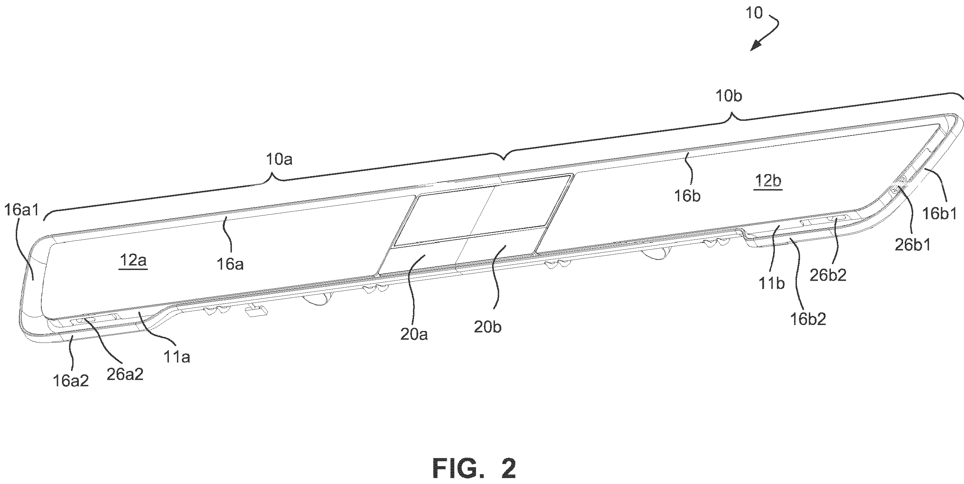

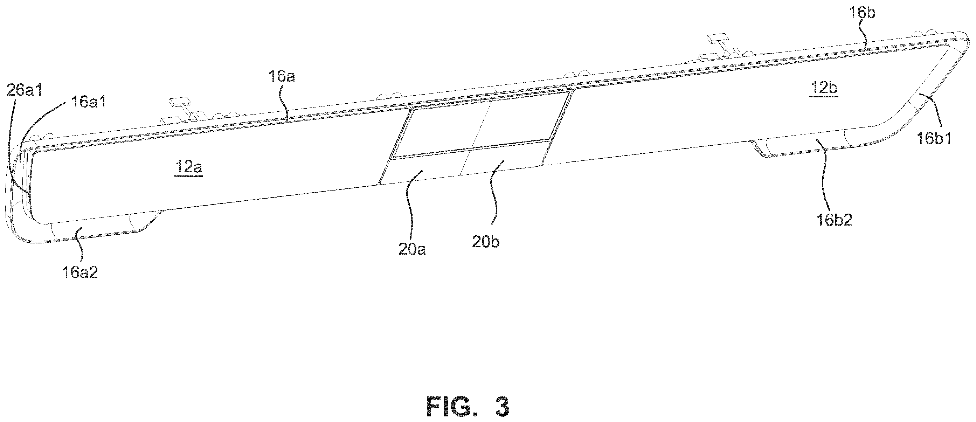

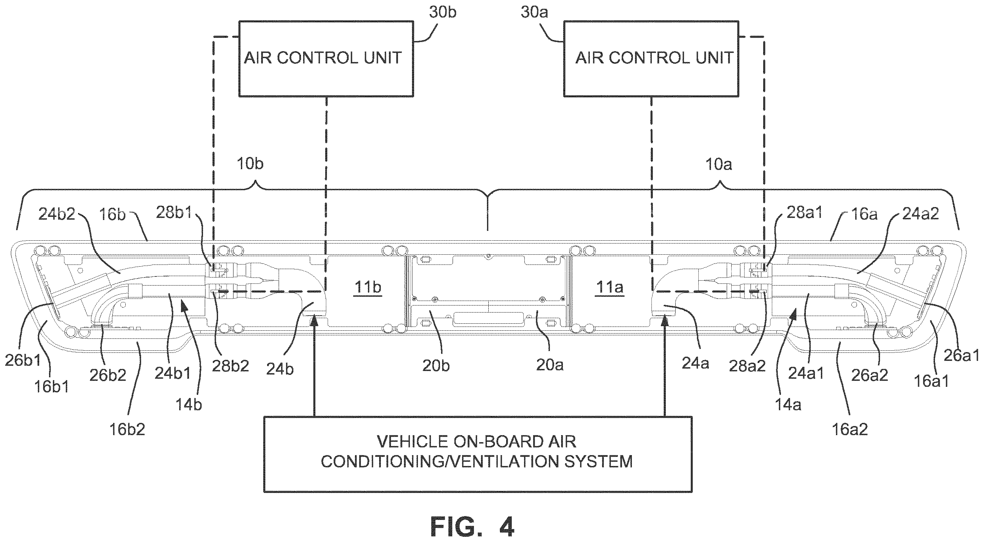

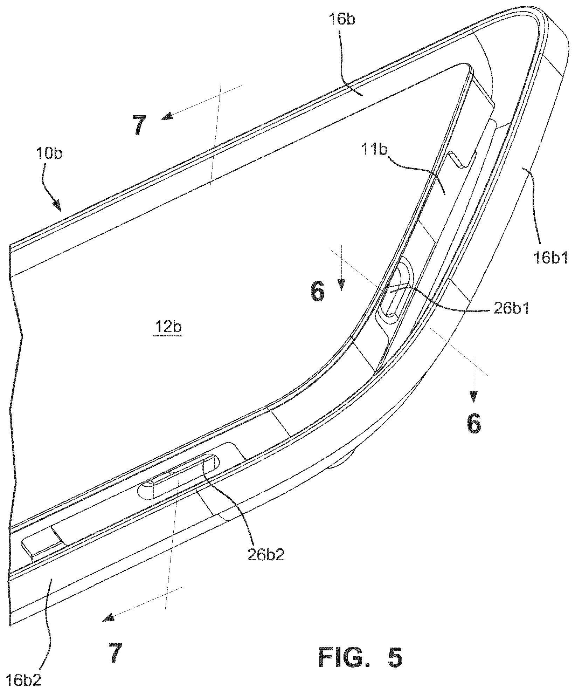

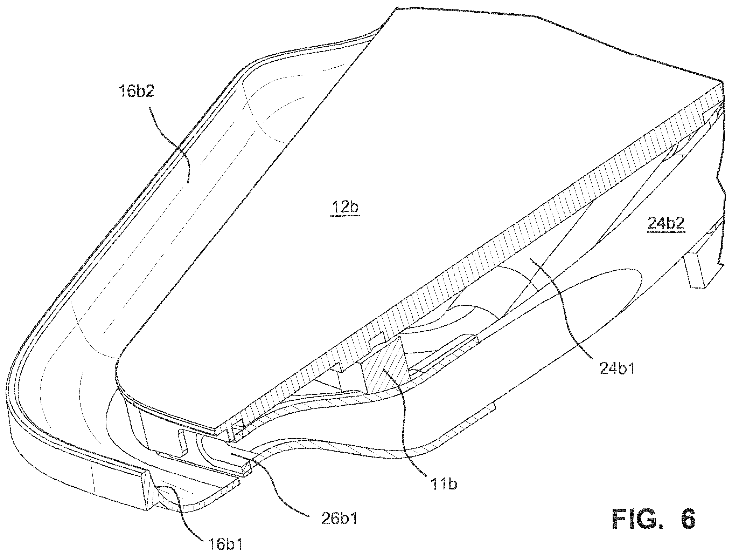

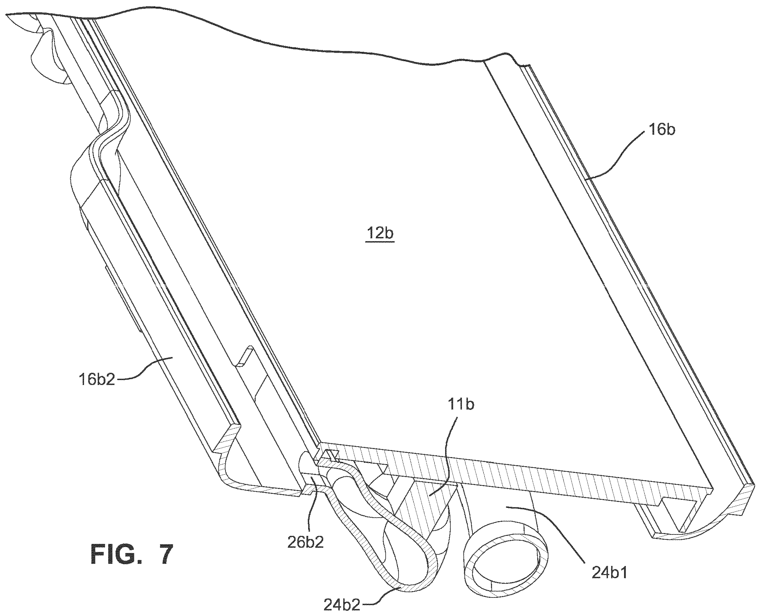

Accompanying FIGS. 2-7 show the passenger comfort module 10 in accordance with an embodiment of the present invention in greater detail. As shown therein, the passenger comfort module 10 is provided with mirror image module segments 10a, 10b each respectively having a support frame 11a, 11b and a visible substantially planar front faceplate 12a, 12b which covers the support frame 11a, 11b and the ventilation system 14a, 14b supported by the support frame 11a, 11b (see FIG. 4). A trim frame member 16a, 16b is integrally joined to the support frame members 11a, 11b and surrounds the perimetrical edge of the faceplate 12a, 12b. Each of the trim frame members 16a, 16b integrally includes concavely curved side edge diffuser and bottom edge diffuser portions 16a1, 16a2, 16b1, 16b-2 that are adjacent to and spaced from the side and the distal bottom edges of the faceplate 12a, 12b, respectively.

Optionally, each of the module segments 10a, 10b may be provided with an annunciator light system 20a, 20b. Alternatively, the annunciator light system 20a, 20b can be substituted with an informational display screen if desired or some other form of passenger interface device.

Important to the embodiments disclosed herein, the ventilation systems 14a, 14b of the module segments 10a, 10b will include a supply conduit 24a, 24b connected to the on-board air conditioning/ventilation system 25 of the vehicle. Each of the supply conduits are fluid connected to a pair of branch conduits 24a1, 24a2 and 24b1, 24b2 that terminate in respective elongate ventilation openings 26a1, 26a2, 26b1, 26b2. The air flow volume and hence velocity through each of the branch conduits 24a1, 24a2 and 24b1, 24b2 is controlled through individual electrically operated valves 28a1, 28a2, 28b1, 28b2 that can be controlled by the passenger P2 via air control units 30a, 30b, respectively. The air control units 30a, 30b can be an integral component of the module segments 10a, 10b or mounted in proximity to or as a component part of the passenger seat.

It will be appreciated that the passenger comfort module 10 depicted in drawing FIGS. 2-7 and described hereinabove may be used satisfactorily in a club seating arrangement as depicted in FIG. 1 where each of the passengers P1, P2 may enjoy the diffused ambient air environment that is achieved by the respective module segments 10a, 10b, respectively. Of course, those skilled in this art will realize that the embodiments disclosed herein may be used for other types of seating arrangements, including in-line seating arrangements.

The air jets discharged from each of the elongate ventilation openings 26a1, 26a2, 26b1, 26b2 will therefore impinge on the concavely curved side edge diffuser and bottom edge diffuser portions 16a1, 16a2, 16b1, 16b-2, respectively. Specifically, the air jets discharged from the ventilation openings 26a1, 26b1 will be directed toward the curved side edge diffuser portions 16a1, 16b1 in a direction generally parallel or slightly angled downwardly (e.g., 5°-15°) relative to the longitudinal axis of the module segments 10a, 10b, respectively. On the other hand, the air jets discharged from the ventilation openings 26a2, 26b2 will be directed toward the curved side edge diffuser portions 16a2, 16b2 in a direction that is substantially normal (e.g., 90° ± about 5°). Thus, the air jets discharged from the ventilation openings 26b1, 26b2 which impinge on the side and bottom edge diffusers 16b1, 16b2 will be caused to merge thereby forming the widely diffused air zone AZ volume which envelops the passenger P2 seated in the passenger seat PS2 therebelow (see FIG. 1B). Similarly, although not shown, if the passenger seat PS1 were to be provided with the module unit 10a rather than the conventional comfort module that includes the ventilation gasper VG as shown in FIG. 1A, then the air jets discharged from the ventilation openings 26a1, 26a2 which impinge on the side and bottom edge diffusers 16a1, 16a2 will be caused to merge thereby forming a similar widely diffused air zone volume which envelops the passenger P1 seated in the passenger seat PS1 therebelow.

Therefore, while reference is made to particular embodiments of the invention, various modifications within the skill of those in the art may be envisioned. Therefore, it is to be understood that the invention is not to be limited to the disclosed embodiment, but is defined by the claims.

## Claims

1. An overhead passenger comfort module (10) which includes a module segment comprising:
a support frame member (11a, 11b) which includes a peripheral trim frame member (16a, 16b); and
a ventilation system (14a, 14b) supported by the support frame member (11a, 11b), wherein
the ventilation system (14a, 14b) comprises:
(i) a supply conduit (24a, 24b) adapted to being fluid-connected to a supply of ventilation air; and
(ii) first and second branch conduits (24a1, 24a2, 24b1, 24b2) fluid-connected at one end to the supply conduit (24a, 24b) and terminating in elongate first and second ventilation openings (26a1, 26a2, 26b1, 26b2) at first and second edge regions of the support frame member (11a, 11b), and wherein
the trim frame member (16a, 16b) includes first and second concavely curved edge diffuser portions (16a1, 16a2, 16b1, 16b2) which are adjacently positioned to and spaced from the first and second ventilation openings (26a1, 26a2, 26b1, 26b2) respectively, wherein
ventilation air discharged from the first and second ventilation openings (26a1, 26a2, 26b1, 26b2) impinges on the concavely curved first and second edge diffuser portions (16a1, 16a2, 16b1, 16b2) of the trim frame member (16a, 16b) so as create a diffused volume of air which envelops substantially a passenger seated therebelow to establish a personal ambient air zone for the passenger;
wherein the overhead passenger comfort module (10) further comprises first and second valves operatively associated with the first and second branch conduits (24a1, 24a2, 24b1, 24b2) and operable to control air flow therethrough, respectively.

2. The overhead passenger comfort module (10) according to claim 1, which further comprises a control unit (30a, 30b) operably connected to the first and second valves to allow passenger control of the air flow through the first and second branch conduits (24a1, 24a2, 24b1, 24b2), respectively.

3. The overhead passenger comfort module (10) according to claim 1, further comprising a front face plate (12a, 12b) attached to the support frame (11a, 11b) and visibly covering the ventilation system (14a, 14b).

4. The overhead passenger comfort module (10) according to claim 3, wherein the front face plate (12a, 12b) is substantially planar.

5. The overhead passenger comfort module (10) according to claim 1,
wherein
the first and second ventilation openings (26a1, 26a2, 26b1, 26b2)are positioned at side and bottom edge regions of the support frame member (11a, 11b), and wherein
the concavely curved first and second edge diffuser portions (16a1, 16a2, 16b1, 16b2) are adjacently positioned to and spaced from the first and second ventilation openings (26a1, 26a2, 26b1, 26b2) at the side and bottom edge regions of the support frame member (11a, 11b), respectively.

6. The overhead passenger comfort module (10) according to claim 1, further comprising at least one of a speaker system, annunciator light system and information display screen.

7. A vehicle which comprises a passenger seat and the overhead passenger comfort module (10) according to claim 1 positioned over the passenger seat.

8. The vehicle according to claim 7, wherein the vehicle is a passenger aircraft, a passenger bus or a passenger train car.

9. An overhead passenger comfort module (10) which includes a mirror image pair of adjacent module segments (10a, 10b), wherein each of the module segments (10a, 10b) comprises the features of a overhead passenger comfort module (10) as defined in one of the preceding claims.

10. An aircraft which comprises a pair of facing passenger seats and the overhead passenger comfort module (10) according to claim 9 positioned over the passenger seats so that passengers in the passenger seats have a respective one of the module segments (10a, 10b) positioned overhead.

## Patentansprüche

1. Überkopf-Passagierkomfort-Modul (10) aufweisend ein Modulsegment, welches aufweist:
ein Tragrahmenelement (11a, 11b), welches ein umlaufendes Dekorblendenelement (16a, 16b) aufweist; und
ein Belüftungssystem (14a, 14b) welches vom Tragrahmenelement (11a, 11b) getragen wird, wobei
das Belüftungssystem (14a, 14b) aufweist:
(i) eine Zuführungsleitung (24a, 24b), welche dafür eingerichtet ist, mit einer Zufuhr von Belüftungsluft strömungsverbunden zu sein; und
(ii) eine erste und eine zweite Zweigleitung (24a1, 24a2, 24b1, 24b2), welche mit einem Ende der Zuführungsleitung (24a, 24b) strömungsverbunden sind und in längslichen ersten und zweiten Belüftungsöffnungen (26a1, 26a2, 26b1, 26b2) in einem ersten und einem zweiten Bereich des Tragrahmenelements (11a, 11b) enden; und wobei
das Dekorblendenelement (16a, 16b) einen ersten und einen zweiten konkav gewölbten Randdiffusorabschnitt (16a1, 16a2, 16b1, 16b2) aufweist, welche jeweils angrenzend an und beabstandet von der ersten beziehungsweise der zweiten Belüftungsöffnung (26a1, 26a2, 26b1, 26b2) angeordnet sind, wobei
von den ersten und zweiten Belüftungsöffnungen (26a1, 26a2, 26b1, 26b2) abgegebene Belüftungsluft derart auf die konkav gewölbten ersten und zweiten Randdiffusorabschnitte (16a1, 16a2, 16b1, 16b2) des Dekorblendenelements (16a, 16b) auftreffen, dass sie ein diffuses Luftvolumen erzeugen, welches einen darunter sitzenden Passagier im Wesentlichen umhüllt, um eine persönliche Umgebungsluftzone für den Passagier zu schaffen;
wobei das Überkopf-Passagierkomfort-Modul (10) ferner ein erstes und ein zweites Ventil aufweist, welche jeweils mit der ersten beziehungsweise der zweiten Zweigleitung (24a1, 24a2, 24b1, 24b2) operativ verbunden sind und zum Steuern des Luftstroms betätigt werden können.

2. Überkopf-Passagierkomfort-Modul (10) nach Anspruch 1, welches ferner eine Steuereinheit (30a, 30b) aufweist, welche mit dem ersten beziehungsweise dem zweiten Ventil operativ verbunden ist, um dem Passagier das Steuern des Luftstroms durch die erste beziehungsweise die zweite Zweigleitung (24a1, 24a2, 24b1, 24b2) zu ermöglichen.

3. Überkopf-Passagierkomfort-Modul (10) nach Anspruch 1, ferner aufweisend eine Frontplatte (12a, 12b), welche am Tragrahmen (11a, 11b) angebracht ist und die Sicht auf das Belüftungssystem (14a, 14b) verdeckt.

4. Überkopf-Passagierkomfort-Modul (10) nach Anspruch 3, wobei die Frontplatte (12a, 12b) im Wesentlichen eben ist.

5. Überkopf-Passagierkomfort-Modul (10) nach Anspruch 1, wobei die erste und die zweite Belüftungsöffnung (26a1, 26a2, 26b1, 26b2) an seitlichen und unteren Randbereichen des Tragrahmenelements (11a, 11b) angeordnet sind, und wobei die konkav gewölbten ersten und zweiten Diffusorabschnitte (16a1, 16a2, 16b1, 16b2) angrenzend an und beabstandet von der ersten beziehungsweise der zweiten Belüftungsöffnung (26a1, 26a2, 26b1, 26b2) an den seitlichen und unteren Randbereichen des Tragrahmenelements (11a, 11b) angeordnet sind.

6. Überkopf-Passagierkomfort-Modul (10) nach Anspruch 1, ferner aufweisend mindestens ein Element aus der Gruppe umfassend ein Lautsprechersystem, ein Signalleuchtensystem und einen Informationsanzeigebildschirm.

7. Fahrzeug, welches einen Passagiersitz und das Überkopf-Passagierkomfort-Modul (10) nach Anspruch 1 angeordnet über dem Passagiersitz aufweist.

8. Fahrzeug nach Anspruch 7, wobei das Fahrzeug ein Passagierflugzeug, ein Reisebus oder ein Personenzugwaggon ist.

9. Überkopf-Passagierkomfort-Modul (10), welches ein spiegelbildliches Paar benachbarter Modulsegmente (10a, 10b) aufweist, wobei jedes der Modulsegmente (10a, 10b) die Merkmale eines Überkopf-Passagierkomfort-Modul (10) wie in einem der vorstehenden Ansprüche definiert, aufweist.

10. Luftfahrzeug, welches ein Paar gegenüberliegender Passagiersitze und das Überkopf-Passagierkomfort-Modul (10) nach Anspruch 9 aufweist, welches derart über den Passagiersitzen angeordnet ist, dass über jedem der Passagiere in den Passagiersitzen jeweils eines der Modulsegmente (10a, 10b) angeordnet ist.

## Revendications

1. Un module de confort passager en plafonnier (10) qui comprend un segment de module comprenant :
un élément de cadre de support (11a, 11b) qui comprend un élément de cadre de finition périphérique (16a, 16b) ;
et un système de ventilation (14a, 14b) supporté par l'élément de cadre de support (11a, 11b), lequel système de ventilation (14a, 14b) comprend :
(i) un conduit d'alimentation (24a, 24b) adapté à être raccordé en fluide à une alimentation en air de ventilation ; et
(ii) des premier et second conduits de dérivation (24a1, 24a2, 24b1, 24b2) raccordés en fluide à une extrémité au conduit d'alimentation (24a, 24b) et se terminant par des première et seconde ouvertures de ventilation allongées (26a1, 26a2, 26b1, 26b2) au niveau de premières et secondes zones de bord de l'élément de cadre de support (11a, 11b), et dans lequel
l'élément de cadre de finition (16a, 16b) comprend des première et seconde portions diffuseur de bord concave (16a1, 16a2, 16b1, 16b2) qui sont positionnées de manière adjacente et espacées respectivement des première et seconde ouvertures de ventilation (26a1, 26a2, 26b1, 26b2),
lequel air de ventilation évacué des première et seconde ouvertures de ventilation (26a1, 26a2, 26b1, 26b2) frappe les première et seconde portions diffuseur de bord concave (16a1, 16a2, 16b1, 16b2) de l'élément de cadre de finition (16a, 16b) de façon à créer un volume d'air diffusé qui enveloppe sensiblement un passager assis en dessous afin d'établir une zone d'air ambiant personnel pour le passager ;
lequel module de confort passager en plafonnier (10) comprend en outre des première et seconde vannes associées de manière fonctionnelle aux premier et second conduits de dérivation (24a1, 24a2, 24b1, 24b2) et actionnables pour commander le flux d'air à travers ceux-ci, respectivement.

2. Le module de confort passager en plafonnier (10) selon la revendication 1, qui comprend en outre une unité de commande (30a, 30b) connectée de manière fonctionnelle aux première et seconde vannes pour permettre au passager de commander le flux d'air à travers les premier et second conduits de dérivation (24a1, 24a2, 24b1, 24b2), respectivement.

3. Le module de confort passager en plafonnier (10) selon la revendication 1, comprenant en outre une plaque frontale (12a, 12b) fixée à l'élément de cadre de support (11a, 11b) et recouvrant visiblement le système de ventilation (14a, 14b).

4. Le module de confort passager en plafonnier (10) selon la revendication 3, dans lequel la plaque frontale (12a, 12b) est sensiblement plane.

5. Le module de confort passager en plafonnier (10) selon la revendication 1, dans lequel
les première et seconde ouvertures de ventilation (26a1, 26a2, 26b1, 26b2) sont positionnées au niveau des zones de bord latéral et de bord inférieur de l'élément de cadre de support (11a, 11b), et dans lequel
les première et seconde portions diffuseur de bord concave (16a1, 16a2, 16b1, 16b2) sont positionnées de manière adjacente et espacées des première et seconde ouvertures de ventilation (26a1, 26a2, 26b1, 26b2) au niveau des zones de bord latéral et de bord inférieur de l'élément de cadre de support (11a, 11b), respectivement.

6. Le module de confort passager en plafonnier (10) selon la revendication 1, comprenant en outre au moins l'un d'un système de haut-parleurs, d'un système de voyants lumineux et d'un écran d'affichage d'informations.

7. Un véhicule qui comprend un siège passager et le module de confort passager en plafonnier (10) selon la revendication 1 positionné au-dessus du siège passager.

8. Le véhicule selon la revendication 7, dans lequel le véhicule est un aéronef de transport de passagers, un autobus de passagers ou une voiture de train de passagers.

9. Un module de confort passager en plafonnier (10) qui comprend une paire en image miroir de segments de module adjacents (10a, 10b), dans lequel chacun des segments de module (10a, 10b) comprend les caractéristiques d'un module de confort passager en plafonnier (10) tel que défini dans l'une quelconque des revendications précédentes.

10. Un aéronef qui comprend une paire de sièges passager en vis-à-vis et le module de confort passager en plafonnier (10) selon la revendication 9 positionné au-dessus des sièges passager de sorte que les passagers dans les sièges passager disposent chacun d'un des segments de module (10a, 10b) positionné en plafonnier.
